(19) Europäisches Patentamt
European Patent Office
Office européen des brevets

(11) **EP 4 156 124 A1**

(12) **EUROPEAN PATENT APPLICATION**
published in accordance with Art. 153(4) EPC

(43) Date of publication:
**29.03.2023 Bulletin 2023/13**

(51) International Patent Classification (IPC):
**G06V 10/62** (2022.01)

(21) Application number: **22794249.7**

(22) Date of filing: **29.01.2022**

(86) International application number:
**PCT/CN2022/075102**

(87) International publication number:
**WO 2022/227768 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.04.2021 CN 202110470439**

(71) Applicant: **Beijing Baidu Netcom Science Technology Co., Ltd.
Beijing 100085 (CN)**

(72) Inventors:
• **ZHOU, Desen**
  **Beijing 100085 (CN)**
• **WANG, Jian**
  **Beijing 100085 (CN)**
• **SUN, Hao**
  **Beijing 100085 (CN)**

(74) Representative: **Studio Torta S.p.A.
Via Viotti, 9
10121 Torino (IT)**

(54) **DYNAMIC GESTURE RECOGNITION METHOD AND APPARATUS, AND DEVICE AND STORAGE MEDIUM**

(57) The disclosure provides a method for recognizing a dynamic gesture, an apparatus for recognizing a dynamic gesture, a device and a storage medium, and relates to the field of computer technology, in particular to the field of artificial intelligence technology such as computer vision and deep learning. The method includes: obtaining a plurality of video frames by sampling a video stream; obtaining a plurality of key point features respectively corresponding to the plurality of video frames by performing key point feature detection of human body area on the plurality of video frames respectively; determining dependent features among the plurality of key point features, and a plurality of image features respectively corresponding to the plurality of video frames; and obtaining a target dynamic gesture by recognizing dynamic gestures in the video stream based on the dependent features and the plurality of image features. Thus, the loss of useful information in the video stream can be avoided, and the accuracy and recognition effect of dynamic gesture recognition can be effectively improved.

FIG. 1

Description

**CROSS-REFERENCE TO RELATED APPLICATION**

This application claims priority to Chinese patent application No. 202110470439.0, titled with "Method and Apparatus for Recognizing Dynamic Gesture, Device, and Storage Medium" and filed by Beijing Baidu Netcom Science Technology Co., Ltd. on April 28, 2021.

**TECHNICAL FIELD**

The disclosure relates to the field of computer technologies, especially the field of artificial intelligence (AI) technologies such as computer vision and deep learning, in particular to a method and an apparatus for recognizing a dynamic gesture, a device, and a storage medium.

**BACKGROUND**

AI is a subject that studies using computers to simulate certain human thinking processes and intelligent behaviors (such as learning, reasoning, thinking, and planning), which has both the hardware-level technology and the software-level technology. The AI hardware technology includes technologies such as sensor, special AI chip, cloud computing, distributed storage, and big data processing. The AI software technology includes computer vision, speech recognition technology, natural language processing technology, machine learning/deep learning, big data processing technology, and knowledge map technology.

With the continuous development and improvement of AI technologies, AI has played an extremely important role in various fields related to human daily life. For example, AI has made the significant progress in a gesture recognition scene. In the gesture recognition scene, features and types of figure gestures in video images are recognized accordingly and the recognized figure gestures are used as references for some applications. For example, the recognized figure gestures can be simulated by AI or any other possible tasks can be performed with reference to the recognized gestures.

**SUMMARY**

The disclosure provides a method for recognizing a dynamic gesture, an apparatus for recognizing a dynamic gesture, an electronic device, a storage medium, and a computer program product.

According to a first aspect of the disclosure, a method for recognizing a dynamic gesture is provided. The method includes: obtaining a plurality of video frames by sampling a video stream; obtaining a plurality of key point features respectively corresponding to the plurality of video frames by performing key point feature detection of human body area on the plurality of video frames respectively; determining dependent features among the plurality of key point features, and a plurality of image features respectively corresponding to the plurality of video frames; and obtaining a target dynamic gesture by recognizing dynamic gestures in the video stream based on the dependent features and the plurality of image features.

According to a second aspect of the disclosure, an apparatus for recognizing a dynamic gesture is provided. The apparatus includes: a sampling module, a detecting module, a determining module, and a recognizing module. The sampling module is configured to obtain a plurality of video frames by sampling a video stream. The detecting module is configured to obtain a plurality of key point features respectively corresponding to the plurality of video frames by performing key point feature detection of human body area on the plurality of video frames respectively. The determining module is configured to determine dependent features among the plurality of key point features, and a plurality of image features respectively corresponding to the plurality of video frames. The recognizing module is configured to obtain a target dynamic gesture by recognizing dynamic gestures in the video stream based on the dependent features and the plurality of image features.

According to a third aspect of the disclosure, an electronic device is provided. The electronic device includes: at least one processor and a memory communicatively coupled to the at least one processor. The memory stores instructions executable by the at least one processor, and when the instructions are executed by the at least one processor, the method for recognizing a dynamic gesture of the first aspect of the disclosure is implemented.

According to a fourth aspect of the disclosure, a non-transitory computer-readable storage medium having computer instructions stored thereon is provided. The computer instructions are configured to cause a computer to implement the method for recognizing a dynamic gesture of the first aspect of the disclosure.

According to a fifth aspect of the disclosure, a computer program product including computer programs is provided. When the computer programs are executed by a processor, the method for recognizing a dynamic gesture of the first aspect of the disclosure is implemented.

It should be understood that the content described in this section is not intended to identify key or important features of embodiments of the disclosure, nor is it intended to limit the scope of the disclosure. Additional features of the disclosure will be easily understood based on the following description.

**BRIEF DESCRIPTION OF THE DRAWINGS**

The drawings are used to better understand solutions and do not constitute a limitation to the disclosure, in which:

FIG. 1 is a schematic diagram of a first embodiment of the disclosure.

FIG. 2 is a schematic diagram of a second embodiment of the disclosure.

FIG. 3 is a schematic diagram of image matting with a human body detection box of an embodiment of the disclosure.

FIG. 4 is a schematic diagram of a third embodiment of the disclosure.

FIG. 5 is a schematic diagram of a fourth embodiment of the disclosure.

FIG. 6 is a schematic diagram of a fifth embodiment of the disclosure.

FIG. 7 is a block diagram of an electronic device for implementing a method for recognizing a dynamic gesture according to an embodiment of the disclosure.

## DETAILED DESCRIPTION

The following describes embodiments of the disclosure with reference to the accompanying drawings, which includes various details of the embodiments of the disclosure to facilitate understanding and shall be considered merely exemplary. Therefore, those skilled in the art should recognize that various changes and modifications can be made to the embodiments described herein without departing from the scope and spirit of the disclosure. For clarity and conciseness, descriptions of well-known functions and structures are omitted in the following description.

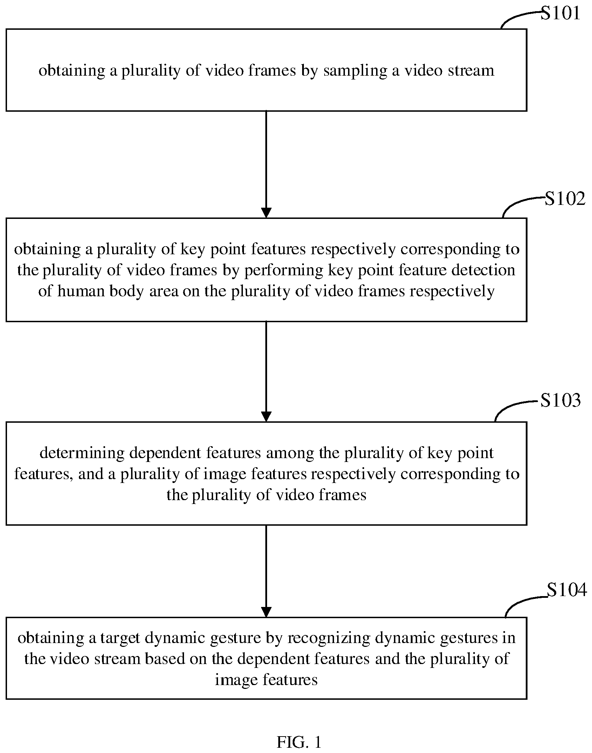

FIG. 1 is a schematic diagram of a first embodiment of the disclosure.

It should be noted that the executive body of the method for recognizing a dynamic gesture of embodiments of the disclosure is an apparatus for recognizing a dynamic gesture. The apparatus can be realized by software and/or hardware. The apparatus can be configured in an electronic device. The electronic device includes but not limited to a terminal and a server.

The embodiments of the disclosure relate to the field of AI technologies, in particular to the field of computer vision, deep learning, and the like, and can be applied to scenes for recognizing dynamic gestures, to improve the accuracy and recognition effect of dynamic gesture recognition in the scenes.

Artificial intelligence is abbreviated as AI, which is a new technical science that studies and develops theories, methods, technologies and application systems used to simulate, extend, and expand human intelligence.

Deep learning is to learn internal laws and representation levels of sample data. The information obtained in the learning process is very helpful to the interpretation of data such as texts, images and sounds. The ultimate goal of deep learning is to enable machines to have the same analytical learning ability as people, and to be able to recognize words, images, sounds and other data.

Computer vision refers to using cameras and computers instead of human eyes to identify, track and measure targets, and to further perform graphics processing, so that the images after computer processing can become images more suitable for human eyes to observe or for transmission to instruments for detection.

In the gesture recognition scene, features and types of figure gestures in video images are recognized accordingly and the recognized figure gestures are used as references for some applications. For example, the recognized figure gestures can be simulated by AI or any other possible tasks can be performed with reference to the recognized gestures, which is not limited in the disclosure.

As illustrated in FIG. 1, the method for recognizing a dynamic gesture includes the following steps.

In S101, a plurality of video frames are obtained by sampling a video stream.

The video data may be recorded by a recording device in the gesture recognition scene, such as environmental video data of the gesture recognition scene captured by the recording device, which is not limited.

The video stream refers to a transmission of video data. For example, the video data can be treated as a stable and continuous stream that is transmitted through the network. Due to the "flow" feature of the video stream, a browser or a plug-in of an electronic device can display multimedia data before the transmission of the whole video data is completed.

Therefore, embodiments of the disclosure support the dynamic gesture recognition for the video stream, so that the useful information contained in the video stream can be effectively used. The useful information can be understood as the context information contained in the video stream, such as the figure feature and background feature of each video frame, and the linkage relation feature of the same object between different video frames, which is not limited.

The above video stream can be the initially collected video stream. In embodiments of the disclosure, after the initial video stream is collected, the video stream can also be sampled to obtain multiple video frames, so as to reduce the amount of data to be processed and ensure the recognition efficiency while retaining the useful information of the video stream.

In some embodiments, when sampling the video stream, any possible sampling method can be used to sample the video stream, for example, setting a sampling function to sample, or pre-identifying each video frame of the video stream and taking the video frames whose image quality satisfies conditions as the video frames obtained by sampling, or sampling the video stream with a pre-trained model, which is not limited.

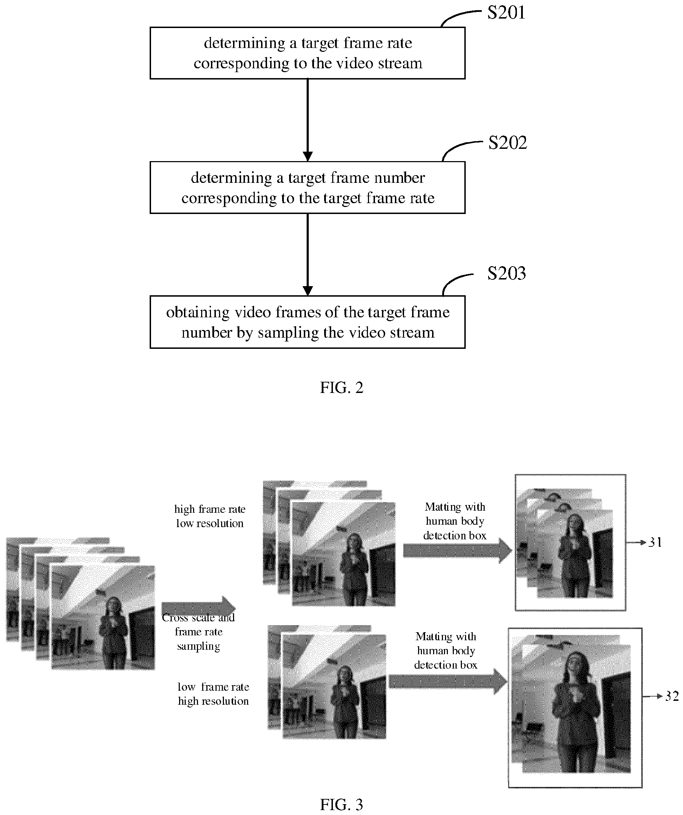

In other embodiments, the video stream is sampled to obtain the plurality of video frames. FIG. 2 is a schematic diagram of a second embodiment of the disclosure, as illustrated in FIG. 2, the method may include the following steps.

In S201, a target frame rate corresponding to the video stream is determined.

That is, this embodiment supports to assist in sampling in combination with the frame rate corresponding to the video stream. The frame rate corresponding to the video stream can be called the target frame rate. The frame rate is a frequency (rate) at which bitmap images in units of frames appear continuously on a display. For the video stream, the frame rates corresponding to different time points can be identical or different, that is, during the transmission of the video stream, the frame rate may change dynamically.

Thus, this embodiment can determine the current frame rate of the video stream in real time as the target frame rate, and then trigger subsequent adaptive adjustment of the number of sampled frames in combination with the determined target frame rate, so that the corresponding features of video frames having different frame rates can be considered. In this way, when recognizing dynamic gestures, the corresponding features of video frames having different frame rates can be learned and fused, thereby effectively ensuring the accuracy of gesture recognition.

In S202, a target frame number corresponding to the target frame rate is determined.

After the target frame rate corresponding to the video stream is determined, the target frame number corresponding to the target frame rate can be determined. For example, the target frame number corresponding to the target frame rate can be determined by referring to the preconfigured corresponding relation. For example, in a vision frame number pyramid $\{T_1, T_2, ..., T_n\}$, $T_i$ represents the target frame number corresponding to the current target frame rate, where n is a positive integer greater than 2. The setting method of the vision frame number pyramid can be preset adaptively in combination with the application scenarios of the video stream, which is not limited.

In S203, video frames of the target frame number are obtained by sampling the video stream.

After the target frame rate corresponding to the video stream and the target frame number corresponding to the target frame rate are determined, sampling of the video stream can be triggered to obtain the video frames of the target frame number.

In other embodiments, embodiments of the disclosure also support sampling the video stream in combination with the frame rate and the resolution, so as to achieve the cross scale and frame rate sampling method, which is described as follows.

When sampling the video stream to obtain the video frames of the target frame number, this embodiment can determine a target resolution corresponding to a current video frame when sampling the current video frame and determine a space size corresponding to the target resolution. A sampled current video frame is obtained by compressing or amplifying the current video frame based on the space size. The current video frame is updated until the video frames of the target frame number are sampled. Therefore, the cross scale and frame rate sampling method is realized, that is, when the frame number is large, the resolution of the video frame is compressed correspondingly, and when the frame number is small, the resolution of the video frame is amplified correspondingly, so as to ensure the relative consistency of the number of video frames having different resolutions. In addition, when recognizing dynamic gestures, the corresponding features of video frames having different resolutions can be learned and fused, thereby effectively ensuring the accuracy of gesture recognition.

When sampling the current video frame, the current resolution corresponding to the current video frame is determined, which can be called the target resolution, and then the space size corresponding to the target resolution can be determined in combination with the preconfigured spatial resolution pyramid $\{S_1, S_2, ..., S_m\}$, where $S_j$ represents the space size under the current resolution. Then, the current video frame can be compressed or amplified based on the space size to obtain the current video frame. In addition, j is a positive integer greater than or equal to 1 and less than or equal to m, m is a positive integer less than or equal to N, and N is a positive integer.

In embodiments of the disclosure, it is supported to sample the video stream in combination with the frame rate and resolution, so as to achieve the cross scale and frame rate sampling method. For example, based on the above vision frame number pyramid and the spatial resolution pyramid, the cross scale and frame rate sampling method $\{(T_1, S_m), (T_2, S_{m-1}) ..., (T_n, S_1)\}$ is obtained, and the video stream is sampled based on the parameters contained therein.

In S102, a plurality of key point features respectively corresponding to the plurality of video frames are obtained by performing key point feature detection of human body area on the plurality of video frames respectively.

After the video stream is sampled to obtain the plurality of video frames, the key point feature detection of the human body area can be carried out for each video frame. The key points can be, for example, some joint points that can typically identify human actions, such as pixel points corresponding to elbow joints and knee joints, which can be called key points.

However, in embodiments of the disclosure, the above human body area may specifically include a human body area containing multiple key points, such as a hand area and a face area in the overall human body area, which is not limited.

Optionally, in some embodiments, a plurality of detection boxes respectively corresponding to the plurality of video frames are obtained by detecting the human body area on the plurality of video frames respectively. A plurality of target detection boxes in the plurality of video frames are determined, and a plurality of local images corresponding to the plurality of target detection boxes are extracted. The plurality of target detection boxes correspond to the same human body area. The plurality of key point features respectively corresponding to the plurality of video frames are obtained by performing key point feature detection on the plurality of local images respectively.

That is, after the plurality of video frames are sampled, a preset human body area detector can be used to detect the human body area of each video frame, so as to obtain one or more detection boxes corresponding to the video frame. For the detection boxes of the same human body area in all video frames, a joint boundary frame set is generated. The joint boundary frame set can include the detection boxes corresponding to the same human body area in all video frames, and the local images contained in the detection boxes of the same human body area in all video frames are extracted, so that by image matting with the joint human body detection box, the human body area containing key points can be more focused during the dynamic gesture recognition, the interference of the background area image can be reduced, at the same time, the resolution of the human body area is amplified, to improve the convenience of recognition, and to ensure the accuracy of dynamic gesture recognition.

In embodiments of the disclosure, any other possible key point recognition method can also be used to perform key point feature detection on the human body area of the video frames, such as the thermal image detection method, which is not limited.

The above detected key point features can be, for example, the position coordinates corresponding to the key points and the image features corresponding to the key points, which are not limited.

As illustrated in FIG. 3, FIG. 3 is a schematic diagram of image matting with a joint human body detection box of an embodiment of the disclosure. Firstly, the plurality of video frames are sampled based on the cross-scale and frame rate sampling method, and then the plurality of local images determined for the plurality of video frames can be, for example, the local images presented by module 31 and module 32 in FIG. 3, which are local images in the overall video frame images.

In S103, dependent features among the plurality of key point features, and a plurality of image features respectively corresponding to the plurality of video frames are determined.

After the plurality of key point features respectively corresponding to the plurality of video frames are obtained by performing the above key point feature detection on the human body area of the plurality of video frames respectively, the dependent features among the plurality of key point features can be determined. The dependent features include: dependent features among different key point features in the same local image, and dependent features among different key points in different local images. The dependent features can be used to represent the relation among different key points.

The dependent features can be quantified by a model to obtain quantized values. For example, assuming that key point A and key point B correspond to joint points at both ends of the same limb (upper arm limb) respectively, and when the human body makes a certain dynamic gesture action (e.g., slowly raising the hand), the key point A and the key point B usually have a certain feature association relation (for example, if the key point A has position feature a, position feature B corresponding to the key point B will change dynamically with the implementation of the gesture action, and the dynamic change relation between the position feature A and its corresponding position feature B can be called the dependent features), which is not limited.

In embodiments of the disclosure, it is also possible to determine the plurality of image features respectively corresponding to the plurality of video frames, that is, one video frame corresponds to one image picture, and the image recognition method can be used to recognize the image picture to obtain the image feature (e.g., image color feature, brightness feature, lightness feature, and color temperature feature), which is not limited.

In S104, a target dynamic gesture is obtained by recognizing dynamic gestures in the video stream based on the dependent features and the plurality of image features.

After determining the dependent features among the key point features and the image features respectively corresponding to the video frames, the dependent features and the image features can be fused to obtain the fusion features, and then gesture recognition can be performed based on the fusion features.

For example, the fusion features can be input into a pre-trained classifier to obtain a dynamic gesture category output by the classifier and serve as the target dynamic gesture, or a fully connected layer of the existing gesture recognition model (for example, a neural network model or a machine learning model capable of performing gesture recognition tasks) can be regressed based on the dependent features and the image features, to obtain the target gesture recognition model, which is configured to determine the target dynamic gesture based on the above fusion features, which is not limited.

In some embodiments, the video stream is sampled to obtain the plurality of video frames, the plurality of key point features respectively corresponding to the plurality of video frames are obtained by performing key point feature detection of human body area on the plurality of video frames respectively, the dependent features among the plurality of key point features, and the plurality of image features respectively corresponding to the plurality of video frames are determined. The target dynamic gesture is obtained by recognizing dynamic gestures in the video stream based on the dependent features and the plurality of image features. The human body area is extracted from the initial video stream, and the target dynamic gesture is determined based on the key point features of the human body area and the image features respectively corresponding to each video frame, such that the loss of useful information of the video stream is avoided, and the accuracy and recognition effect of dynamic gesture recognition is effectively improved.

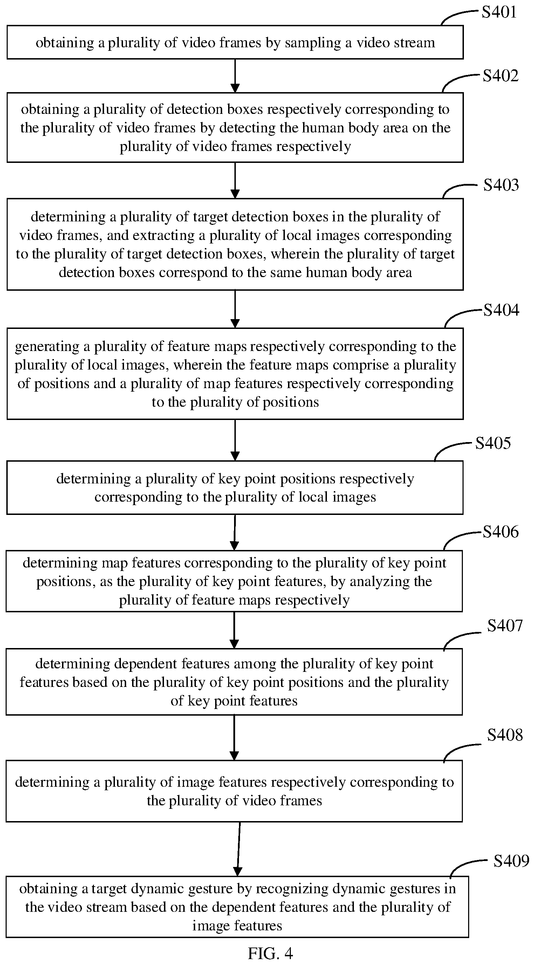

FIG. 4 is a schematic diagram of a third embodiment of the disclosure.

As illustrated in FIG. 4, the method for recognizing a dynamic gesture includes the following steps.

In S401, a plurality of video frames are obtained by sampling a video stream.

The description of S401 can be specifically referred to the above embodiments, and will not be repeated herein.

In S402, a plurality of detection boxes respectively corresponding to the plurality of video frames are obtained by detecting a human body area on the plurality of video frames respectively.

In S403, a plurality of target detection boxes in the plurality of video frames are obtained, and a plurality of local images corresponding to the plurality of target detection boxes are extracted, in which the plurality of target detection boxes correspond to the same human body area.

That is, after the plurality of video frames are sampled, the preset human body area detector can be used to detect the human body area in each video frame to obtain one or more detection boxes corresponding to the video frames. Then, for the detection boxes of the same human body area in all video frames, the joint boundary frame set is generated. The joint boundary frame set includes the detection boxes corresponding to the same human body area in all video frames, and the local images contained in the detection boxes of the same human body area in all video frames are extracted, so that by image matting with the joint human body detection box, the human body area containing key points can be more focused during the dynamic gesture recognition, the interference of the background area image can be reduced, at the same time, the resolution of the human body area is amplified, to improve the convenience of recognition, and to ensure the accuracy of dynamic gesture recognition.

In combination with FIG. 3, the plurality of local images corresponding to the target detection frames can be extracted as the local images presented by module 31 and module 32 in FIG. 3, which are the local images in the overall video frame images.

In S404, a plurality of feature maps respectively corresponding to the plurality of local images are generated, the feature maps include a plurality of positions and a plurality of map features respectively corresponding to the plurality of positions.

After determining the plurality of target detection boxes in the plurality of video frames and extracting the plurality of local images corresponding to the plurality of target detection boxes, the plurality of feature maps respectively corresponding to the plurality of local images can be generated. The feature maps are to assist in the subsequent determination of the corresponding key point features.

Assuming that a local frame image includes a plurality of pixels, based on the map feature corresponding to each pixel (for example, the pixel corresponds to the brightness, color, depth and other features in the local image), the corresponding feature map is constituted based on the positions of pixels and the map feature corresponding to each of the plurality of pixels, and the feature map includes: a plurality of positions and a plurality of map features respectively corresponding to the plurality of positions.

In S405, a plurality of key point positions respectively corresponding to the plurality of local images are determined.

In S406, map features corresponding to the plurality of key point positions are determined, as the plurality of key point features, by analyzing the plurality of feature maps respectively.

Suppose that the feature map corresponding to the local image of the $t^{th}$ frame is $x^t \in R^{h \times w \times c}$, the key point position detected in the local image of the $t^{th}$ frame is recorded as $p_k^t \in R^2$, $k = 1,2, \ldots K$. The key point position can be matched with the position in the above feature map, and the map feature corresponding to the matching position can be determined as the key point feature.

For example, for each key point, the key point feature corresponding to the key point can be determined, and the key point feature can be recorded as $x_p^{k,t} \in R^c$, the initial position of each key point in the initial local image is determined as the key point position, and then the key point position is aligned with the position in the feature map, to obtain an $x_p^{k,t} \in R^{c+2}$, and two additional channels are original positions, that is, $x_p^{k,t} \in R^{c+2}$ can be regarded as including the key point position and the key point feature.

The temporal shift module (TSM) model based on the residual network (ResNet) can be used to extract the key point features, which is not limited.

Therefore, in some embodiments, the plurality of feature maps respectively corresponding to the plurality of local images are generated, and the plurality of key point positions respectively corresponding to the plurality of local images are determined, and the map features corresponding to the plurality of key point positions are determined as the plurality of key point features by analyzing the plurality of feature maps respectively. In this way, the key point features are obtained from the image features corresponding to the local images, and a key point graph network is constructed to fit the dependent features among the key point features, which can effectively improve the accuracy of key point feature recognition, thereby helping to improve the subsequent dynamic gesture recognition effect.

In S407, dependent features among the plurality of key point features are determined based on the plurality of key point positions and the plurality of key point features.

After the above key point feature detection is performed on the human body area of the plurality of video frames to obtain the plurality of key point features respectively corresponding to the plurality of video frames, the dependent features among the plurality of key point features can be determined based on the plurality of key point positions and the plurality of key point features.

That is, embodiments of the disclosure are to fuse two kinds of features to determine the dependent features among the key point features, that is, the key point positions and the key point features are fused to determine the corresponding dependent features, so that the determined dependent features can be more accurate, to achieve strong context information, and to express the feature association relation among different key points more clearly, so as to help improving the accuracy of dynamic gesture recognition.

Optionally, in some embodiments, the plurality of key point positions and the plurality of key point features can be input into a pre-trained graph neural network model to obtain the dependent features output by the graph neural network model, so as to ensure the representation ability of the dependent features and the acquisition efficiency of the dependent features at the same time.

For example, for the key point positions and the key point features extracted above, the graph neural network model based on dual flow adaptive graph convolution network can be used to fit the dependent features of different key points, so that it can carry strong context information.

In S408, a plurality of image features respectively corresponding to the plurality of video frames are determined.

In embodiments of the disclosure, it is also possible to determine the plurality of image features respectively corresponding to the plurality of video frames, that is, one video frame corresponds to one image picture, and the image recognition method can be used to recognize the image picture, so as to obtain image feature (for example, image color feature, brightness feature, lightness feature, and color temperature feature), which is not limited.

In S409, a target dynamic gesture is obtained by recognizing dynamic gestures in the video stream based on the dependent features and the plurality of image features.

After determining the dependent features among the key point features and the image features corresponding to the video frames, the dependent features and the image features can be fused to obtain the fusion features, and then gesture recognition can be performed based on the fusion features.

For example, the fusion features can be input into a pre-trained classifier to obtain a dynamic gesture category output by the classifier as the target dynamic gesture, or a fully connected layer of the existing gesture recognition model (for example, a neural network model or a machine learning model capable of performing gesture recognition tasks) can be regressed based on the dependent features and the image features, to obtain the target gesture recognition model, which is configured to determine the target dynamic gesture based on the above fusion features, which is not limited.

The dynamic gestures in the video stream are recognized based on the dependent features and the image features to obtain the target dynamic gesture. The dynamic gestures are recognized and classified by referring to the fusion features obtained by fusing the dependent features and the image features. Since the dependent features are strongly dependent on the key points, the dynamic gesture recognition method has strong robustness to different dynamic gestures, and more image features are configured as reference to effectively improve the accuracy and recognition effect of dynamic gesture recognition.

In some embodiments, the video stream is sampled to obtain the plurality of video frames. The plurality of key point features respectively corresponding to the plurality of video frames are obtained by performing key point feature detection of human body area on the plurality of video frames respectively. Dependent features among the plurality of key point features are determined. The target dynamic gesture is obtained by recognizing dynamic gestures in the video stream based on the dependent features. Since the human body area is extracted from the initial video stream, and the target dynamic gesture is determined in combination with the key point features of the human body area, so as to avoid losing the useful information of the video stream and effectively improve the accuracy and recognition effect of dynamic gesture recognition. The matting method based on the joint human body detection box is realized, so that the human body area containing key points can be more focused during dynamic gesture recognition, and the interference of the background area image is reduced. At the same time, the resolution of the human body area is amplified, thereby improving the convenience of recognition, and ensuring the accuracy of dynamic gesture recognition. The feature maps corresponding to the local images are generated, the key point positions corresponding to the local images are determined, and the map features corresponding to the plurality of key point positions are determined as the plurality of key point features, by analyzing the plurality of feature maps respectively. Therefore, the key point features are obtained from the image features corresponding to the local images, and the key point graph network is constructed to fit the dependent features among the key point features, which can effectively improve the accuracy of key point feature recognition, and helps to improve the subsequent dynamic gesture recognition effect. The key point positions and the key point features are fused to determine the corresponding dependent features, so that the determined dependency features can be more accurate, strong context information is achieved, and the feature association relation among different key points can be expressed more clearly, thus helping to improve the accuracy of dynamic gesture recognition.

According to embodiments of the disclosure, the disclosure provides an apparatus for recognizing a dynamic gesture.

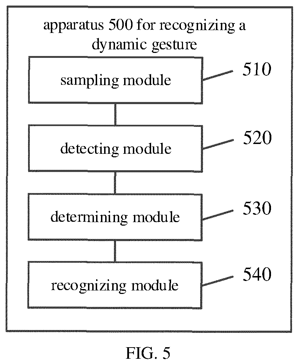

FIG. 5 is a schematic diagram of a fourth embodiment of the disclosure.

As illustrated in FIG. 5, the apparatus for recognizing a dynamic gesture 500 includes: a sampling module 510, a detecting module 520, a determining module 530 and a recognizing module 540.

The sampling module 510 is configured to obtain a plurality of video frames by sampling a video stream.

The detecting module 520 is configured to obtain a plurality of key point features respectively corresponding to the plurality of video frames by performing key point feature detection of human body area on the plurality of video frames respectively.

The determining module 530 is configured to determine dependent features among the plurality of key point features, and a plurality of image features respectively corresponding to the plurality of video frames.

The recognizing module 540 is configured to obtain a target dynamic gesture by recognizing dynamic gestures in the video stream based on the dependent features and the plurality of image features.

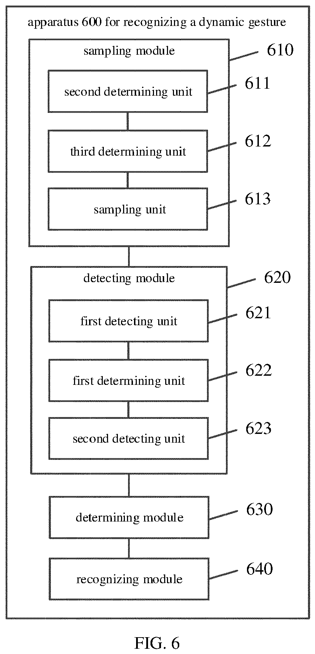

In a possible implementation, as illustrated in FIG. 6, FIG. 6 is a schematic diagram of a fifth embodiment of the disclosure. The apparatus for recognizing a dynamic gesture 600 includes: a sampling module 610, a detecting module 620, a determining module 630 and a recognizing module 640.

The detecting module 620 includes: a first detecting unit 621, a first determining unit 622 and a second detecting unit 623.

The first detecting unit 621 is configured to obtain a plurality of detection boxes respectively corresponding to the plurality of video frames by detecting the human body area on the plurality of video frames respectively.

The first determining unit 622 is configured to determine a plurality of target detection boxes in the plurality of video frames, and extract a plurality of local images corresponding to the plurality of target detection boxes, in which the plurality of target detection boxes correspond to the same human body area.

The second detecting unit 623 is configured to obtain the plurality of key point features respectively corresponding to the plurality of video frames by performing key point feature detection on the plurality of local images respectively.

In a possible implementation, the second detecting unit 623 is further configured to: generate a plurality of feature maps respectively corresponding to the plurality of local images, in which the feature maps include a plurality of positions and a plurality of map features respectively corresponding to the plurality of positions; determine a plurality of key point positions respectively corresponding to the plurality of local images; and determine map features corresponding to the plurality of key point positions, as the plurality of key point features, by analyzing the plurality of feature maps respectively.

In a possible implementation, the determining module 630 is further configured to: determine the dependent features among the plurality of key point features based on the plurality of key point positions and the plurality of key point features.

In a possible implementation, the determining module 630 is further configured to: obtain the dependent features by inputting the plurality of key point positions and the plurality of key point features into a pre-trained map neural network model.

In a possible implementation, as illustrated in FIG. 6, the sampling module 610 includes: a second determining unit 611, a third determining unit 612 and a sampling unit 613.

The second determining unit 611 is configured to determine a target frame rate corresponding to the video stream.

The third determining unit 612 is configured to determine a target frame number corresponding to the target frame rate.

The sampling unit 613 is configured to obtain video frames of the target frame number by sampling the video stream.

In a possible implementation, the sampling unit 613 is further configured to: determine a target resolution corresponding to a current video frame when sampling the current video frame; determine a space size corresponding to the target resolution; obtain a sampled current video frame by compressing or amplifying the current video frame based on the space size; and update the current video frame until the video frames of the target frame number are sampled.

It can be understood that the apparatus for recognizing a dynamic gesture 600 in FIG. 6 of this embodiment and the apparatus for recognizing a dynamic gesture 500 in the above embodiment, the sampling module 610 and the sampling module 510, the detecting module 620 and the detecting module 520, the determining module 630 and the determining module 530, and the recognizing module 640 and the recognizing module 540 in the above embodiment can have the same functions and structures.

It should be noted that the above explanation of the method for recognizing a dynamic gesture is also applicable to the apparatus for recognizing a dynamic gesture of this embodiment, and will not be repeated here.

In the embodiment, the plurality of video frames are obtained by sampling the video stream. The plurality of key point features respectively corresponding to the plurality of video frames are obtained by detecting key point features of the human body area of each of the plurality of video frames. The dependent features among the plurality of key point features, and the plurality of image features respectively corresponding to the plurality of video frames are determined. The target dynamic gesture is obtained by recognizing dynamic gestures in the video stream based on the dependent features and the plurality of image features. The human body area is extracted from the initial video stream, and the target dynamic gesture is determined by combining the key point features of the human body area with the image features corresponding to each video frame, so as to avoid losing the useful information of the video stream and to effectively improve the accuracy and recognition effect of dynamic gesture recognition.

According to the embodiments of the disclosure, the disclosure also provides an electronic device, a readable storage medium and a computer program product.

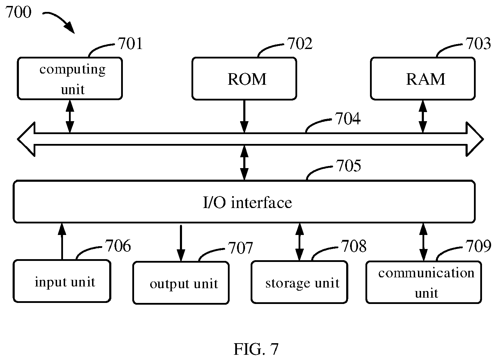

FIG. 7 is a block diagram of an electronic device for implementing the method for recognizing a dynamic gesture according to the embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 7, the device 700 includes a computing unit 701 performing various appropriate actions and processes based on computer programs stored in a read-only memory (ROM) 702 or computer programs loaded from the storage unit 708 to a random access memory (RAM) 703. In the RAM 703, various programs and data required for the operation of the device 700 are stored. The computing unit 701, the ROM 702, and the RAM 703 are connected to each other through a bus 704. An input/output (I/O) interface 705 is also connected to the bus 704.

Components in the device 700 are connected to the I/O interface 705, including: an inputting unit 706, such as a keyboard, a mouse; an outputting unit 707, such as various types of displays, speakers; a storage unit 708, such as a disk, an optical disk; and a communication unit 709, such as network cards, modems, and wireless communication transceivers. The communication unit 709 allows the device 700 to exchange information/data with other devices through a computer network such as the Internet and/or various telecommunication networks.

The computing unit 701 may be various general-purpose and/or dedicated processing components with processing and computing capabilities. Some examples of computing unit 701 include, but are not limited to, a central processing unit (CPU), a graphics processing unit (GPU), various dedicated AI computing chips, various computing units that run machine learning model algorithms, and a digital signal processor (DSP), and any appropriate processor, controller and microcontroller. The computing unit 701 executes the various methods and processes described above, such as the method for recognizing a dynamic gesture.

For example, in some embodiments, the method for recognizing a dynamic gesture may be implemented as a computer software program, which is tangibly contained in a machine-readable medium, such as the storage unit 708. In some embodiments, part or all of the computer program may be loaded and/or installed on the device 700 via the ROM 702 and/or the communication unit 709. When the computer program is loaded on the RAM 703 and executed by the computing unit 701, one or more steps of the method described above may be executed. Alternatively, in other embodiments, the computing unit 701 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and the block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system, to solve the defects of difficult management and weak business scalability in the traditional physical host and virtual private server (VPS) service. The server can also be a server of distributed system or a server combined with block-chain.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of the disclosure shall be included in the protection scope of the disclosure.

**Claims**

1. A method for recognizing a dynamic gesture, comprising:

    obtaining a plurality of video frames by sampling a video stream;
    obtaining a plurality of key point features respectively corresponding to the plurality of video frames by performing key point feature detection of human body area on the plurality of video frames respectively;
    determining dependent features among the plurality of key point features, and a plurality of image features respectively corresponding to the plurality of video frames; and
    obtaining a target dynamic gesture by recognizing dynamic gestures in the video stream based on the dependent features and the plurality of image features.

2. The method of claim 1, wherein obtaining the plurality of key point features respectively corresponding to the plurality of video frames by performing the key point feature detection of human body area on the plurality of video frames respectively, comprises:

    obtaining a plurality of detection boxes respectively corresponding to the plurality of video frames by detecting the human body area on the plurality of video frames respectively; determining a plurality of target detection boxes in the plurality of video frames, and extracting a plurality of local images corresponding to the plurality of target detection boxes, wherein the plurality of target detection boxes correspond to the same human body area; and obtaining the plurality of key point features respectively corresponding to the plurality of video frames by performing key point feature detection on the plurality of local images respectively.

3. The method of claim 2, wherein obtaining the plurality of key point features respectively corresponding to the plurality of video frames by performing key point feature detection on the plurality of local images respectively, comprises:

generating a plurality of feature maps respectively corresponding to the plurality of local images, wherein the feature maps comprise a plurality of positions and a plurality of map features respectively corresponding to the plurality of positions; determining a plurality of key point positions respectively corresponding to the plurality of local images; and determining map features corresponding to the plurality of key point positions, as the plurality of key point features, by analyzing the plurality of feature maps respectively.

4. The method of claim 3, wherein determining the dependent features among the plurality of key point features, comprises: determining the dependent features among the plurality of key point features based on the plurality of key point positions and the plurality of key point features.

5. The method of claim 4, wherein determining the dependent features among the plurality of key point features based on the plurality of key point positions and the plurality of key point features comprises: obtaining the dependent features by inputting the plurality of key point positions and the plurality of key point features into a pre-trained map neural network model.

6. The method of any one of claims 1-5, wherein obtaining the plurality of video frames by sampling the video stream, comprises:

determining a target frame rate corresponding to the video stream; determining a target frame number corresponding to the target frame rate; and obtaining video frames of the target frame number by sampling the video stream.

7. The method of claim 6, wherein obtaining the video frames of the target frame number by sampling the video stream, comprises:

determining a target resolution corresponding to a current video frame when sampling the current video frame; determining a space size corresponding to the target resolution; obtaining a sampled current video frame by compressing or amplifying the current video frame based on the space size; and updating the current video frame until the video frames of the target frame number are sampled.

8. An apparatus for recognizing a dynamic gesture, comprising:

a sampling module, configured to obtain a plurality of video frames by sampling a video stream; a detecting module, configured to obtain a plurality of key point features respectively corresponding to the plurality of video frames by performing key point feature detection of human body area on the plurality of video frames respectively; a determining module, configured to determine dependent features among the plurality of key point features, and a plurality of image features respectively corresponding to the plurality of video frames; and a recognizing module, configured to obtain a target dynamic gesture by recognizing dynamic gestures in the video stream based on the dependent features and the plurality of image features.

9. The apparatus of claim 8, wherein the detecting module comprises:

a first detecting unit, configured to obtain a plurality of detection boxes respectively corresponding to the plurality of video frames by detecting the human body area on the plurality of video frames respectively; a first determining unit, configured to determine a plurality of target detection boxes in the plurality of video frames, and extract a plurality of local images corresponding to the plurality of target detection boxes, wherein the plurality of target detection boxes correspond to the same human body area; and a second detecting unit, configured to obtain the plurality of key point features respectively corresponding to the plurality of video frames by performing key point feature detection on the plurality of local images respectively.

10. The apparatus of claim 9, wherein the second detecting unit is further configured to:

generate a plurality of feature maps respectively corresponding to the plurality of local images, wherein the feature maps comprise a plurality of positions and a plurality of map features respectively corresponding to the plurality of positions;

determine a plurality of key point positions respectively corresponding to the plurality of local images; and

determine map features corresponding to the plurality of key point positions, as the plurality of key point features, by analyzing the plurality of feature maps respectively.

11. The apparatus of claim 10, wherein the determining module is further configured to:
determine the dependent features among the plurality of key point features based on the plurality of key point positions and the plurality of key point features.

12. The apparatus of claim 11, wherein the determining module is further configured to:
obtain the dependent features by inputting the plurality of key point positions and the plurality of key point features into a pre-trained map neural network model.

13. The apparatus of any one of claims 8-12, wherein the sampling module comprises:

a second determining unit, configured to determine a target frame rate corresponding to the video stream;

a third determining unit, configured to determine a target frame number corresponding to the target frame rate; and

a sampling unit, configured to obtain video frames of the target frame number by sampling the video stream.

14. The apparatus of claim 13, wherein the sampling unit is further configured to:

determine a target resolution corresponding to a current video frame when sampling the current video frame;

determine a space size corresponding to the target resolution;

obtain a sampled current video frame by compressing or amplifying the current video frame based on the space size; and
update the current video frame until the video frames of the target frame number are sampled.

15. An electronic device, comprising:

at least one processor; and
a memory communicatively coupled to the at least one processor; wherein,
the memory stores instructions executable by the at least one processor, when the instructions are executed by the at least one processor, the at least one processor is enabled to execute the method according to any one of claims 1-7.

16. A non-transitory computer-readable storage medium having computer instructions stored thereon, wherein the computer instructions are configured to cause a computer to execute the method according to any one of claims 1-7.

17. A computer program product comprising computer programs, wherein when the computer programs are executed by a processor, the method according to any one of claims 1-7 is implemented.

S101

obtaining a plurality of video frames by sampling a video stream

S102

obtaining a plurality of key point features respectively corresponding to the plurality of video frames by performing key point feature detection of human body area on the plurality of video frames respectively

S103

determining dependent features among the plurality of key point features, and a plurality of image features respectively corresponding to the plurality of video frames

S104

obtaining a target dynamic gesture by recognizing dynamic gestures in the video stream based on the dependent features and the plurality of image features

FIG. 1

S201

determining a target frame rate
corresponding to the video stream

S202

determining a target frame number
corresponding to the target frame rate

S203

obtaining video frames of the target frame
number by sampling the video stream

FIG. 2

high frame rate
low resolution

Matting with
human body
detection box

31

Cross scale and
frame rate
sampling

low frame rate
high resolution

Matting with
human body
detection box

32

FIG. 3

S401

obtaining a plurality of video frames by sampling a video stream

S402

obtaining a plurality of detection boxes respectively corresponding to the plurality of video frames by detecting the human body area on the plurality of video frames respectively

S403

determining a plurality of target detection boxes in the plurality of video frames, and extracting a plurality of local images corresponding to the plurality of target detection boxes, wherein the plurality of target detection boxes correspond to the same human body area

S404

generating a plurality of feature maps respectively corresponding to the plurality of local images, wherein the feature maps comprise a plurality of positions and a plurality of map features respectively corresponding to the plurality of positions

S405

determining a plurality of key point positions respectively corresponding to the plurality of local images

S406

determining map features corresponding to the plurality of key point positions, as the plurality of key point features, by analyzing the plurality of feature maps respectively

S407

determining dependent features among the plurality of key point features based on the plurality of key point positions and the plurality of key point features

S408

determining a plurality of image features respectively corresponding to the plurality of video frames

S409

obtaining a target dynamic gesture by recognizing dynamic gestures in the video stream based on the dependent features and the plurality of image features

FIG. 4

apparatus 500 for recognizing a
dynamic gesture

sampling module — 510

detecting module — 520

determining module — 530

recognizing module — 540

FIG. 5

apparatus 600 for recognizing a dynamic gesture

```
sampling module ————— 610

    second determining unit ————— 611

    third determining unit ————— 612

    sampling unit ————— 613


detecting module ————— 620

    first detecting unit ————— 621

    first determining unit ————— 622

    second detecting unit ————— 623


determining module ————— 630

recognizing module ————— 640
```

FIG. 6

700

701
computing
unit

702
ROM

703
RAM

704

705
I/O interface

706
input unit

707
output unit

708
storage unit

709
communication
unit

FIG. 7

**EP 4 156 124 A1**

## INTERNATIONAL SEARCH REPORT

| | International application No. |
|---|---|
| | **PCT/CN2022/075102** |

**A.    CLASSIFICATION OF SUBJECT MATTER**

G06V 10/62(2022.01)i

According to International Patent Classification (IPC) or to both national classification and IPC

**B.    FIELDS SEARCHED**

Minimum documentation searched (classification system followed by classification symbols)

G06V;; G06K

Documentation searched other than minimum documentation to the extent that such documents are included in the fields searched

Electronic data base consulted during the international search (name of data base and, where practicable, search terms used)

CNABS; CNTXT; TWABS; TWTXT; VEN; USTXT; EPTXT; WOTXT; CNKI: 视频, 动态, 手势, 手语, 关键点, 关节, 特征点, 依赖, 关联, 连接, video, dynamic, gesture, sign language, key point, joint, feature point, characteristic point, dependence, relevance, association, connect

**C.    DOCUMENTS CONSIDERED TO BE RELEVANT**

| Category* | Citation of document, with indication, where appropriate, of the relevant passages | Relevant to claim No. |
|---|---|---|
| PX | CN 113177472 A (BEIJING BAIDU NETCOM SCIENCE AND TECHNOLOGY CO., LTD.) 27 July 2021 (2021-07-27) claims 1-17 | 1-17 |
| X | CN 112329525 A (INSTITUTE OF SOFTWARE, CHINESE ACADEMY OF SCIENCES) 05 February 2021 (2021-02-05) description, paragraphs 34-65 | 1-17 |
| X | CN 112183198 A (BEIJING UNIVERSITY OF TECHNOLOGY) 05 January 2021 (2021-01-05) description, paragraphs 47-80 | 1-17 |
| X | CN 112329544 A (HONG KONG SHINING CLOUD TECHNOLOGY COMPANY LIMITED) 05 February 2021 (2021-02-05) description, paragraphs [0035]-[0070] | 1-17 |
| A | CN 110263681 A (TENCENT TECHNOLOGY SHENZHEN CO., LTD.) 20 September 2019 (2019-09-20) entire document | 1-17 |

☑ Further documents are listed in the continuation of Box C.       ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 March 2022** | **12 April 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/075102**

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US 2010235034 A1 (BOEING CO.) 16 September 2010 (2010-09-16)<br>entire document | 1-17 |

Form PCT/ISA/210 (second sheet) (January 2015)

**INTERNATIONAL SEARCH REPORT**
Information on patent family members

| International application No. |
| --- |
| **PCT/CN2022/075102** |

| Patent document cited in search report | | | Publication date (day/month/year) | Patent family member(s) | | | Publication date (day/month/year) |
| --- | --- | --- | --- | --- | --- | --- | --- |
| CN | 113177472 | A | 27 July 2021 | None | | | |
| CN | 112329525 | A | 05 February 2021 | None | | | |
| CN | 112183198 | A | 05 January 2021 | None | | | |
| CN | 112329544 | A | 05 February 2021 | None | | | |
| CN | 110263681 | A | 20 September 2019 | US | 2021406525 | A1 | 30 December 2021 |
| | | | | WO | 2020244434 | A1 | 10 December 2020 |
| | | | | CN | 110263681 | B | 27 July 2021 |
| US | 2010235034 | A1 | 16 September 2010 | US | 7983450 | B2 | 19 July 2011 |
| | | | | US | 2011274358 | A1 | 10 November 2011 |
| | | | | US | 8194925 | B2 | 05 June 2012 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110470439